# DEMANDE DE BREVET EUROPEEN

(11) **EP 0 727 257 A1**
(43) Date de publication de la demande: **21.08.1996**
(21) Numéro de dépôt: 96400284.4
(22) Date de dépôt: 12.02.1996
(51) Int. Cl.: B03B 5/30, B03B 5/28, B03B 5/44, B29B 17/02

(54) **Procédé de traitement d'une pièce comprenant une partie métallique adherant à une partie en matière plastique**

(30) Priorité: 16.02.1995 FR 9501778
(71) Demandeur: ALCATEL CABLE, F-92100 Clichy (FR)
(72) Inventeur: Mastrot, Jean-Luc, F-01000 St Denis les Bourg (FR); Martz, Benoit-Alain, F-69007 Lyon (FR); Mortier, Jean-Bernard, F-38460 St Romain de Jalionas (FR)
(74) Mandataire: Feray, Valérie

(57) **Abrégé**

La présente invention concerne un procédé de traitement d'une pièce (31) comprenant une partie métallique adhérant à une partie en matière plastique à l'aide d'un adhésif, en vue de la séparation de la partie métallique et de la partie en matière plastique, procédé selon lequel on introduit la pièce (31) dans un bain liquide (39) ayant une densité intermédiaire entre celle du métal et celle de la matière plastique, de manière à ce que, une fois la partie métallique séparée de la partie en matière plastique, la partie métallique se dépose par gravité au fond du bain (39) alors que la partie en matière plastique remonte à la surface du bain (39).

Selon l'invention, on chauffe le bain (39) à une température supérieure à la température de ramollissement de l'adhésif mais inférieure à celle de ramollissement de la matière plastique de façon à séparer par décollage la partie métallique de la partie en matière plastique.

## Description

La présente invention concerne la séparation et la récupération des matières premières à partir de produits industriels mis au rebut ; elle concerne en particulier un procédé de traitement d'une pièce (notamment une gaine de câble de transport électrique) comprenant une partie métallique (par exemple en aluminium) adhérant à une partie en matière plastique (par exemple en PVC) à l'aide d'un adhésif, en vue de la séparation et de la récupération des différentes parties.

Une usine de fabrication de câbles utilisés pour les lignes électriques moyenne tension fabrique plusieurs dizaines de milliers de kilomètres de câbles par an. Sur cette production, une partie représentant entre 2 et 3% est déclarée "hors norme" c'est-à-dire inutilisable. Ce sont donc plusieurs centaines de kilomètres qui sont éliminés comme déchets chaque année.

Jusqu'à maintenant, la méthode d'élimination des câbles consiste à séparer l'âme métallique (réutilisable) de l'ensemble composé d'un écran métallique sous forme d'un ruban d'aluminium collé sur une gaine en résine de chlorure de polyvinyle, à broyer l'ensemble écran-gaine ainsi récupéré et à jeter les déchets résultant du broyage au prix de taxes de transport et d'enfouissement.

Il est clair que dans les années à venir, les pouvoirs publics augmenteront ces taxes considérablement et, sans doute, seront amenés à interdire l'enfouissement de ces déchets, car il ne s'agit pas d'une solution convenable pour la protection de l'environnement.

La demande de brevet WO 93/04116 décrit notamment un procédé permettant de séparer un métal d'une matière plastique, ces deux éléments étant liés par une colle. Selon ce procédé, on découpe le matériau à séparer en petits tronçons, puis l'on introduit ces tronçons dans un bain de solvant servant à dissoudre la colle. Une fois la colle dissoute, les morceaux de métal et de matière plastique sont dissociés. La densité du bain de solvant peut être telle que l'on récupère les morceaux de métal au fond du bain, et les morceaux de matière plastique à la surface de ce dernier.

Ce procédé pose un certain nombre de problèmes.

Tout d'abord, les solvants sont en général des produits toxiques ; il faut donc prendre de grandes précautions lors de leur manipulation. Notamment, il existe une législation qui réglemente l'utilisation de certains solvants nocifs, ce qui alourdit le procédé de séparation et le rend de ce fait moins intéressant économiquement.

Par ailleurs, les solvants ont tendance à s'évaporer facilement, de sorte qu'il faut prendre des mesures spécifiques, et donc onéreuses pour les conserver.

De plus, les solvants sont des produits onéreux.

Enfin, les solvants ne sont pas des produits neutres ; ils risquent donc de réagir avec le métal ou la matière plastique des pièces à séparer, et donc de les détériorer.

C'est pourquoi un but de l'invention est de mettre au point un procédé permettant de traiter une pièce comprenant une partie métallique adhérant à une partie en matière plastique à l'aide d'un adhésif, permettant de séparer et de récupérer aussi bien la partie métallique que la partie en matière plastique.

Plus précisément, l'invention a pour objet de mettre au point un tel procédé qui soit moins onéreux et plus simple à mettre en oeuvre que celui de l'art antérieur.

L'invention propose à cet effet un procédé de traitement d'une pièce comprenant une partie métallique adhérant à une partie en matière plastique à l'aide d'un adhésif, en vue de la séparation de ladite partie métallique et de ladite partie en matière plastique, procédé selon lequel on introduit ladite pièce dans un bain liquide ayant une densité intermédiaire entre celle du métal et celle de la matière plastique, de manière à ce que, une fois ladite partie métallique séparée de ladite partie en matière plastique, ladite partie métallique se dépose par gravité au fond dudit bain alors que ladite partie en matière plastique remonte à la surface du bain, **caractérisé en ce que,** ledit adhésif étant capable de se ramollir sous l'effet de la chaleur, l'on chauffe ledit bain à une température supérieure à la température de ramollissement dudit adhésif mais inférieure à celle de ramollissement de ladite matière plastique de façon à séparer par décollage ladite partie métallique de ladite partie en matière plastique.

Selon l'invention, il suffit de chauffer le bain pour faire ramollir l'adhésif et effectuer ainsi la séparation. Il n'est donc plus nécessaire d'utiliser un solvant toxique, onéreux, difficile à manipuler et à conserver, et risquant de détériorer le métal ou la matière plastique à séparer.

Avantageusement, le bain peut être composé d'eau. On comprend bien que notamment dans ce cas, le procédé selon l'invention est particulièrement peu onéreux, facile à mettre en oeuvre et peu dangereux pour l'environnement par rapport au procédé de l'art antérieur.

On peut dissoudre dans le bain un composé lui conférant la densité adaptée, ou bien utiliser un liquide qui intrinsèquement a la densité souhaitée.

Selon un mode de réalisation possible, la pièce est découpée en tronçons de faible longueur et ces tronçons sont introduits dans le bain pour être traités.

D'autres caractéristiques et avantages de la présente invention apparaîtront dans la description suivante d'un mode de réalisation de la présente invention, donné à titre illustratif et nullement limitatif.

Dans les figures suivantes :
- la figure 1 représente en coupe transversale un câble électrique,
- la figure 1A est un grossissement de la partie A de la figure 1,
- la figure 2 représente schématiquement un dispositif de mise en oeuvre du procédé de traitement selon l'invention.

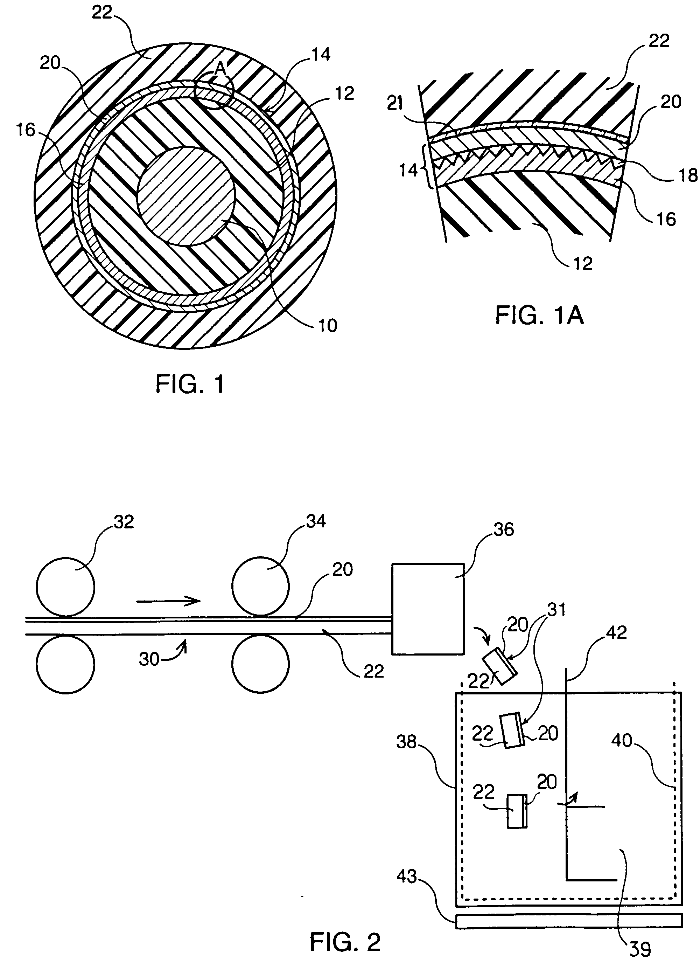

Comme illustré sur la figure 1, un câble utilisé pour le transport d'électricité moyenne tension comprend une âme d'aluminium 10 entourée d'un isolant en polyéthylène réticulé 12 et d'une couche extérieure 14. Cette couche extérieure dont un grossissement a été représenté sur la figure 1A, comprend une couche de semi-conducteur en élastomère 16 cannelée à l'extérieur, une couche de poudre d'étanchéité 18 généralement en carboxy-méthyl-cellulose (CMC), et un ensemble composé d'un écran métallique en aluminium 20 et d'une gaine 22 en chlorure de polyvinyle (PVC). L'écran 20 adhère à la gaine 22 par l'intermédiaire d'un adhésif adapté 21, par exemple une laque à base de PVC et d'un solvant. Un tel adhésif se ramollit sous l'effet de la chaleur. La couche d'aluminium a une faible épaisseur d'environ 0,2 mm et la gaine de PVC 22 a une épaisseur d'environ 3 mm.

Lorsque l'on désire récupérer les matériaux utilisés dans des câbles au rebut, la première opération consiste à dégainer le câble au moyen de deux couteaux situés de part et d'autre du câble et à effectuer une coupe longitudinale de l'ensemble écran 20-gaine 22. En aplatissant les deux demi-ensembles obtenus, on obtient des rubans que l'on peut stocker avant de procéder à la séparation de la partie en aluminium et de la partie en PVC. On doit noter que l'ensemble écran 20-gaine 22 peut être découpé toujours longitudinalement en un seul endroit ou en plus de deux endroits pour former autant de rubans. Mais la coupe en deux parties est celle qui semble la mieux adaptée.

L'ensemble écran 20-gaine 22 ainsi séparé du reste du câble est entraîné sous forme d'un ruban 30 par des jeux de galets d'entraînement 32 et 34, comme illustré à la figure 2. Cet entraînement provoque une déformation du ruban 30 de sorte que la déformation soit élastique pour le PVC et plastique pour l'aluminium. Dans cet état, le PVC tend à reprendre sa forme initiale mais l'aluminium l'en empêche. Cette déformation amènerait le PVC à se détacher de l'aluminium s'il n'y avait pas la liaison assurée par la laque 21 entre les deux composants de l'ensemble.

L'ensemble écran 20-gaine 22 ainsi aplati est découpé par l'unité de coupe 36 en tronçons 31 d'environ 1,5 cm de longueur sur 1 cm de largeur.

Une quantité de tronçons 31 est alors introduite dans une cuve 38 contenant un bain 39 dans lequel se trouvent plongés un égouttoir 40 et un malaxeur 42.

La cuve 38 et le bain 39 sont chauffés par un moyen de chauffage 43 à une température comprise par exemple entre 95°C et 100°C dans le but de ramollir la laque 21 servant au collage de l'aluminium et du PVC, et donc de permettre la séparation de la partie métallique (écran en aluminium 20) et de la partie en matière plastique (gaine en PVC 22). Pendant le chauffage qui dure par exemple de 20 à 30 secondes, on se sert du malaxeur 42 pour homogénéiser le bain 39.

Bien entendu, la température à laquelle est chauffé le bain 39 dépend de la température de ramollissement de l'adhésif 21. De manière générale, elle sera choisie pour être supérieure à la température de ramollissement de l'adhésif 21, pour permettre la séparation de la partie métallique et de la partie en matière plastique, mais inférieure à la température de ramollissement de la matière plastique, pour ne pas faire fondre cette dernière, ce qui la rendrait irrécupérable.

Le bain 39 qui remplit la cuve 38 est composé d'eau dans laquelle a été rajoutée une quantité d'iodure de potassium destinée à augmenter sa densité pour atteindre une valeur comprise entre la densité du PVC égale à 1,39 et celle de l'aluminium égale à 2,7. Après séparation de la couche d'aluminium et de la couche de PVC, l'aluminium reste donc au fond de la cuve alors que le PVC remonte à la surface du bain 39 du fait de sa densité plus faible que celle du bain.

On comprend que le liquide utilisé pour effectuer la séparation et la récupération selon l'invention peut être un liquide quelconque du moment qu'il est inerte vis-à-vis du métal et de la matière plastique à séparer. Ce liquide peut donc être tout simplement de l'eau. On évite ainsi tous les problèmes de l'art antérieur dans lequel le liquide utilisé pour effectuer la séparation est un solvant, produit toxique, onéreux et risquant de réagir avec la matière plastique ou le métal à séparer.

Après séparation et remontée des morceaux de PVC, ceux-ci peuvent être facilement récupérés. La récupération des morceaux d'aluminium se fait ensuite en soulevant l'égouttoir 40.

Bien que dans le mode de réalisation préféré de l'invention, le composé destiné à augmenter la densité du bain soit de l'iodure de potassium, tout autre produit chimique de densité équivalente pourrait être utilisé à partir du moment qu'il est chimiquement neutre vis-à-vis du PVC et de l'aluminium.

Le procédé de traitement selon l'invention a été décrit ci-dessus pour la récupération de l'aluminium et du PVC entourant les câbles de transport d'électricité moyenne tension. Cependant, il est évident pour l'homme du métier qu'un tel procédé peut être appliqué de manière générale, sans sortir du cadre de l'invention, à la récupération d'un métal quelconque, adhérant à une matière plastique quelconque, et ce quelle qu'en soit l'origine (gaine d'un câble ou autre).

## Revendications

1. Procédé de traitement d'une pièce (31) comprenant une partie métallique adhérant à une partie en matière plastique à l'aide d'un adhésif, en vue de la séparation de ladite partie métallique et de ladite partie en matière plastique, procédé selon lequel on introduit ladite pièce (31) dans un bain liquide (39) ayant une densité intermédiaire entre celle du métal et celle de la matière plastique, de manière à ce que, une fois ladite partie métallique séparée de ladite partie en matière plastique, ladite partie métallique se dépose par gravité au fond dudit bain (39) alors que ladite partie en matière plastique remonte à la surface du bain (39),
**caractérisé en ce que,** ledit adhésif étant capable de se ramollir sous l'effet de la chaleur, l'on chauffe ledit bain (39) à une température supérieure à la température de ramollissement dudit adhésif mais inférieure à celle de ramollissement de ladite matière plastique de façon à séparer par décollage ladite partie métallique de ladite partie en matière plastique.

2. Procédé selon la revendication 1 caractérisé en ce que ledit bain est composé d'eau.

3. Procédé selon l'une des revendications 1 ou 2 caractérisé en ce que l'on dissout dans ledit bain un composé lui conférant la densité adaptée.

4. Procédé selon l'une des revendications 1 à 3 caractérisé en ce que ladite partie métallique (20) est en aluminium et ladite partie en matière plastique (22) en chlorure de polyvinyle PVC.

5. Procédé selon la revendication 4 caractérisé en ce que ledit bain est chauffé à une température comprise entre 95 et 100°C.

6. Procédé selon l'une des revendications 4 ou 5 caractérisé en ce que ledit bain contient de l'eau dans laquelle est dissous de l'iodure de potassium en quantité suffisante pour procurer audit bain une densité comprise entre celle du PVC et celle de l'aluminium.

7. Procédé selon l'une des revendications 1 à 6 caractérisé en ce que ladite pièce est découpée en tronçons (31) de faible longueur et en ce que lesdits tronçons sont introduits dans ledit bain.

8. Procédé selon l'une des revendications 1 à 7 caractérisé en ce que ladite pièce constitue l'ensemble écran (20) - gaine (22) d'un câble et se présente, après avoir été détachée du câble, sous la forme d'un ou plusieurs rubans (30) composés d'une partie en matière plastique (22) et d'une partie métallique (20) superposées.

9. Procédé selon la revendication 8 caractérisé en ce que ledit ensemble écran-gaine est découpé longitudinalement à deux endroits diamétralement opposés de façon à former deux rubans identiques après séparation du reste du câble.
